# FASCICULE DE BREVET EUROPEEN

(11) **EP 0 694 722 B1**
(45) Date de publication et mention de la délivrance du brevet: **22.03.2000**
(21) Numéro de dépôt: 95401704.2
(22) Date de dépôt: 18.07.1995
(51) Int. Cl.: F16K 31/60, G05D 23/02

(54) **Tête de robinet thermostatique**
Thermostatisches Ventiloberteil
Thermostatic valve head

(30) Priorité: 21.07.1994 FR 9409032
(43) Date de publication de la demande: 31.01.1996
(73) Titulaire: COMAP société anonyme, F-69008 Lyon (FR)
(72) Inventeur: Robert, Michel, F-80132 Mareuil Caubert (FR)
(74) Mandataire: Maureau, Philippe

(56) Documents cités:
- FR-A- 1 403 262
- FR-A- 2 288 925
- FR-A- 2 339 798
- FR-A- 2 458 019

## Description

L'invention concerne les têtes de robinet thermostatiques pour fluides notamment de chauffage, et plus particulièrement les têtes permettant de régler la température dans une large gamme, mais, si nécessaire, de limiter la gamme de réglage accessible à l'utilisateur.

Une telle tête de robinet thermostatique conformément aux caractéristiques définies dans le préambule de la revendication 1 est connue du document FR-A-2 288 925.

Les robinets thermostatiques sont généralement constitués d'une part d'une tête thermostatique et, d'autre part, d'un corps de robinet renfermant un mécanisme de réglage du débit à clapet à aiguille de commande, coiffé d'une bonnette de protection pouvant jouer le rôle de bouton de manoeuvre de l'aiguille pour une utilisation en robinet conventionnel, cette bonnette étant destinée à être retirée lors de l'assemblage du corps avec la tête thermostatique assurant le maintien de la température en agissant elle-même sur l'aiguille de commande.

On connaît déjà de telles têtes de robinet présentant une structure coaxiale, comportant un bouton ou volant de manoeuvre contenant un élément thermostatique et portant extérieurement des repères numériques ou des pictogrammes pouvant être mis sélectivement, par rotation du bouton, en regard d'un index porté par une embase ou douille, fixée, par exemple au moyen d'une bague filetée intérieurement, au corps de robinet lui-même fileté extérieurement, les différentes positions de réglage du bouton correspondant à des positions dans lesquelles il est plus ou moins vissé autour de la douille et ainsi dans lesquelles un organe mobile axial de l'élément thermosensible est plus ou moins proche de l'aiguille de commande, qu'il peut actionner par l'intermédiaire d'un équipage mobile.

Dans certaines de ces têtes, la limitation de la gamme de réglage est obtenue par le fait que la paroi latérale de la douille comporte une proéminence vers l'intérieur formant butée, en une seule pièce avec la douille ou rapportée, et la paroi latérale du bouton de manoeuvre comporte intérieurement à sa partie opposée au corps de robinet, c'est-à-dire du côté de sa face avant, une collerette percée de trous répartis le long d'une circonférence centrée sur l'axe de la tête et adaptés à recevoir une goupille longitudinale dont une partie du pourtour est susceptible de venir en appui contre la butée lors de la rotation du bouton, de telle. sorte que la course du bouton de manoeuvre soit ainsi limitée. Une limitation "par construction" peut être apportée en usine au moyen d'une première goupille éventuellement fixée à demeure, et une limitation supplémentaire dans la gamme permise peut être apportée par l'utilisateur au moyen d'une ou deux goupilles supplémentaires. La collerette munie de ses goupilles est dissimulée au moyen d'un cache métallique, et ce cache et l'élément thermosensible peuvent être protégés et coiffés par un capot ajouré ; la limitation de la gamme de réglage du robinet par l'utilisateur est effectuée en disposant les goupilles dans les trous appropriés après avoir retiré le capot et le cache. Cependant, d'une part la gamme de réglage peut être modifiée par tout un chacun et en particulier dans le cas de l'utilisation en structure hôtelière, par n'importe quel client qui peut ainsi la limiter par des valeurs tout à fait aberrantes, et d'autre part cette construction implique l'utilisation d'un grand nombre de pièces différentes, dont des goupilles de petites dimensions qui risquent d'être facilement égarées.

Pour remédier au premier de ces inconvénients, on peut songer adapter une bague fendue serrable par une vis à tête spéciale contre la périphérie de la douille et du bouton de manoeuvre, entourant ceux-ci partiellement de telle sorte que le bouton de manoeuvre ne puisse pas être tourné manuellement, la bague comportant une fenêtre laissant apparaître la valeur à laquelle la tête est réglée. Cependant, dans ce cas, aucune latitude de réglage n'est conservée à moins de posséder une clé adaptée ou de deserrer la bague en dévissant la vis, ce qui est malaisé pour l'utilisateur peu technicien, mais ne constitue en revanche pas une entrave aux entreprises malveillantes de quiconque à quelque culture technique ; de plus, le nombre de pièces est encore augmenté.

Dans d'autres têtes de robinet, la limitation de la gamme de réglage est obtenue par le fait que la paroi latérale du bouton de manoeuvre comporte une proéminence vers l'intérieur en arc de circonférence, formant butée, et la douille comporte dans une paroi de sa partie en regard du corps du robinet, c'est-à-dire en face arrière, des fentes s'étendant radialement en direction de l'axe du robinet et adaptées à recevoir des barrettes formant goupilles longitudinales dont une partie est susceptible de venir en appui contre la butée lors de la rotation du bouton, par exemple une goupille fixe montée en usine et dont les dimensions ne permettent pas le retrait lorsque la tête est montée, et deux goupilles amovibles limitant la gamme de réglage permise à l'utilisateur vers le haut et vers le bas. Les inconvénients de cette tête sont les mêmes que ceux de la tête précédemment décrite.

Pour ce type de têtes, dont la limitation de la gamme de réglage est plus malaisée lorsque la tête est montée sur le corps à cause de l'accès aux goupilles en face arrière, on peut en revanche envisager d'adapter plus facilement une bague d'inviolabilité avec des résultats plus satisfaisants, par exemple une bague d'inviolabilité en deux parties en forme de C s'encliquetant de manière irréversible, en coiffant complètement la bague-écrou de raccordement de la tête au corps de robinet et au moins la base de la douille, de telle sorte que les têtes des goupilles proéminentes par rapport à la face arrière de celle-ci ne soient pas accessibles. Cette fois, la tête conserve une possibilité de réglage dans une gamme choisie initialement pouvant être plus restreinte que la gamme prévue par construction, et cette gamme ne peut pas être modifiée, ce qui est le résultat recherché. Mais cette fois encore, le nombre des pièces est relativement élevé, et la structure est compliquée et onéreuse.

L'invention a pour but de remédier à ces inconvénients et de créer une tête thermostatique dont la limitation de la gamme de réglage et éventuellement le blocage puissent être obtenus sans trop augmenter le nombre de pièces, soient relativement faciles pour l'utilisateur, et à laquelle puisse être adapté un dispositif d'inviolabilité, nécessaire sur les lieux collectifs.

A cet effet, l'invention concerne une tête de robinet thermostatique à structure coaxiale, destinée à être fixée à un corps de robinet, du type comportant une douille principale dont une première région d'extrémité est adaptée à être fixée audit corps par au moins un organe de fixation, un bouton de manoeuvre creux vissé à la douille autour d'une deuxième région d'extrémité de celle-ci opposée à la première, un élément thermostatique logé dans le bouton de manoeuvre au-delà de la deuxième région d'extrémité de la douille, un équipage mobile logé au moins partiellement dans la douille et comprenant du côté de la première région d'extrémité de celle-ci un poussoir de clapet de soupape, cet équipage mobile étant en contact avec l'élément thermostatique et actionnable par celui-ci en translation entre deux emplacements où le poussoir est à des distances différentes de la première région d'extrémité de la douille, caractérisée en ce qu'elle comporte une bague d'étalonnage partiellement insérée entre la douille et le bouton de manoeuvre à l'opposé de l'élément thermostatique et liée en rotation à la douille, cette bague comportant au moins une butée d'arrêt adaptée à coopérer avec au moins une butée portée intérieurement par le bouton de manoeuvre, une bague de limitation montée coulissante autour du bouton de manoeuvre dans une région de celui-ci plus proche de l'élément thermostatique que la bague d'étalonnage et comportant une couronne interne de butée à partir de laquelle s'étend longitudinalement et en direction de l'organe de liaison au moins un organe de butée de limitation de course en rotation destiné à être inséré dans une alvéole longitudinale ménagée dans la face interne du bouton de manoeuvre pour coopérer sélectivement avec la butée d'arrêt de la bague d'étalonnage pour limiter sélectivement la possibilité de rotation du bouton de manoeuvre, et un moyen de butée porté par le pourtour du bouton de manoeuvre du côté opposé à la bague d'étalonnage, présentant un diamètre extérieur supérieur au diamètre intérieur de la couronne de la bague de limitation afin de limiter les possibilités de coulissement de la bague de limitation en direction opposée à la bague d'étalonnage.

Grâce à ces caractéristiques, la limitation de la gamme de réglage et éventuellement le blocage sont effectués par la face avant, donc aisés même lorsque la tête est fixée sur le corps de robinet, le dispositif de limitation de la gamme de réglage est indissociable de la tête thermostatique, ce qui limite les risques de perte de pièces, et il est aisément possible de rendre inviolables les limitations de réglage ou le blocage.

En effet, selon une caractéristique optionnelle avantageuse de l'invention, la tête comporte un bague d'inviolabilité fixée autour d'au moins une partie du bouton de manoeuvre, de la bague d'étalonnage et de la bague de limitation, par au moins un moyen de fixation logé partiellement dans une chambre de la paroi de la bague d'inviolabilité et partiellement dans un espace d'immobilisation de la tête de robinet.

D'autres caractéristiques et avantages de l'invention ressortiront de la description qui va suivre d'une forme de réalisation de l'invention donnée à titre d'exemple non limitatif et représentée sur les dessins ci-joints dans lesquels :
- la figure 1 est une vue en coupe longitudinale d'une tête de robinet selon l'invention,
- la figure 2 est une vue extérieure de la tête de la figure 1,
- la figure 3 est une vue extérieure de la tête de la figure 1 munie d'une bague d'inviolabilité, et présentant un écorché montrant le montage de ce dispositif,
- la figure 4 est une vue extérieure de la bague d'étalonnage de la tête de la figure 1,
- la figure 5 est une vue de dessus de la bague de la figure 4,
- la figure 6 est une vue en coupe de la bague de la figure 4 selon la ligne VI-VI,
- la figure 7 est une demi-vue de dessous de la bague de la figure 4,

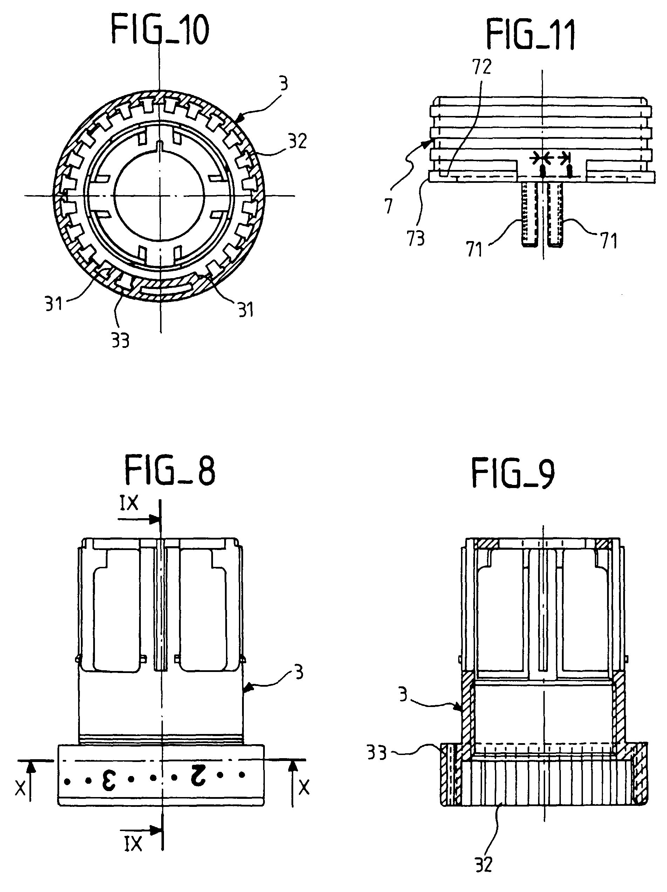

- la figure 8 est une vue extérieure du bouton de manoeuvre de la tête de la figure 1,
- la figure 9 est une vue en coupe longitudinale du bouton de la figure 8 selon la ligne IX-IX,
- la figure 10 est une vue en coupe transversale du bouton de la figure 8 selon la ligne X-X,
- la figure 11 est une vue extérieure de la bague de limitation de la tête de la figure 1,
- la figure 12 est une vue en coupe transversale de la bague d'inviolabilité de la tête de la figure 3, et
- la figure 13 est une vue extérieure d'une goupille de la tête de la figure 3.

La tête thermostatique représentée sur les dessins présente une structure coaxiale.

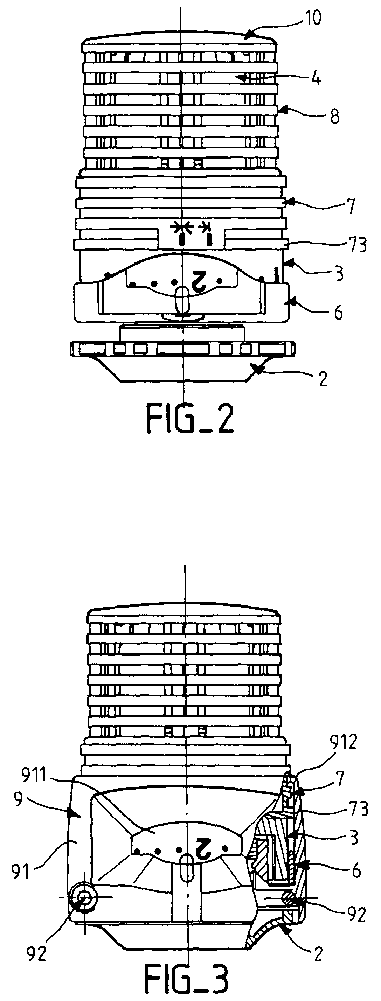

Elle comporte une douille principale 1 dont une région d'extrémité est destinée à être fixée au corps au moyen d'un écrou 2 de liaison, et dont une région d'extrémité opposée porte un filet extérieur auquel est vissée une partie d'un bouton de manoeuvre 3 creux dans le fond duquel, du côté de la douille opposé à l'écrou de liaison, est immobilisé un élement thermostatique 4 dont la face active est en regard de la douille ; la douille 1 et l'élément thermostatique 4 contiennent l'équipage mobile 5 de la tête ; la région d'extrémité du bouton de manoeuvre 3 située du côté de l'écrou de laison 2 entoure la douille 1 à distance de celle-ci, et, dans l'espace entre la douille et le bouton de manoeuvre, est insérée une partie d'un dispositif 6, 7, 8 d'étalonnage, de limitation de gamme de réglage, et de verrouillage de réglage, de la tête, différentes pièces de ce dispositif entourant par ailleurs partiellement le bouton de manoeuvre dans sa région contenant la douille. Un dispositif d'inviolabilité 9 (figure 3) interdisant l'accès au dispositif d'étalonnage, de limitation de gamme de réglage, et de verrouillage de réglage, est optionnellement adaptable à la tête autour de ce dispositif. Un cache de finition 10 est fixé par clipsage contre la face extérieure du fond du bouton de manoeuvre contenant l'élément thermostatique.

L'équipage mobile 5 comprend un pivot 51 formant piston, comportant une tige 511 insérée dans un logement 41 de l'élément thermostatique 4 débouchant dans sa face en regard de la douille et une tête 512 à laquelle sont solidarisées les autres pièces de l'équipage mobile. Plus précisément, un poussoir creux 52 portant, dans son extrémité située du côté de l'écrou 2 de liaison au corps de robinet, un insert 53 d'actionnement de l'aiguille de commande du clapet, est solidarisé au pivot 51 de manière à constituer avec lui une cage déformable en longueur, prolongeant la tige 511 du pivot du côté de l'écrou de liaison ; à cette fin, tandis que la face de la tête 512 du pivot 51 opposée à la tige 511 est chargée par une extrémité d'un ressort 54 hélicoïdal de rappel dont l'extrémité opposée est en appui contre une paroi interne 11 annulaire que comporte la douille 1 à proximité de sa région d'extrémité portant l'écrou 2 de liaison, la paroi latérale du poussoir 52 comporte des pattes 521 longitudinales munies, à leur extrémité libre du côté de la tête du pivot, d'un ergot 522 de clipsage dans un logement 513 creusé dans la face de la tête de pivot à laquelle se raccorde la tige de celui-ci, les pattes longitudinales traversant cette tête dans des échancrures 514 de la périphérie de celui-ci ; l'appui des ergots 522 contre la tête 512 du pivot 51, correspondant à la longueur maximale de la cage déformable, en l'absence d'effort de rapprochement de la tête du pivot et du poussoir 52, est maintenu par un ressort 55 hélicoïdal de surcourse dont les extrémités opposées chargent les faces en regard de ces deux pièces, disposé à l'intérieur de la cage délimitée par les pattes longitudinales 521, tandis que le ressort de rappel 54 est disposé à l'extérieur de cette cage ; entre ses deux positions extrêmes par rapport à la région d'extrémité de la douille 1 fixée au corps, le poussoir 52 est monté coulissant au centre de la douille 1 avec guidage périphérique des pattes 521 par la face interne de la paroi d'un puits 12, s'étendant sur quelques millimètres, depuis la face interne de la paroi annulaire 11 de la douille servant d'appui au ressort de rappel 54, en direction de l'élément thermostatique, et servant également de ce fait de guide à ce ressort.

Le dispositif d'étalonnage, de limitation de gamme de réglage, et de verrouillage de réglage, de la tête, comporte une bague d'étalonnage 6 dont une partie est insérée entre la douille 1 et le bouton de manoeuvre 3 et une partie entoure le bouton de manoeuvre, ces deux parties étant reliées par une zone de raccordement recouvrant la face d'extrémité du bouton de manoeuvre située du côté du corps du robinet ; la bague d'étalonnage 6 est liée en rotation à la douille 1 au moyen de cannelures 13, 61 en relation d'engrènement s'étendant respectivement au pourtour de la douille dans sa partie hors du bouton de manoeuvre 3 et sur une partie de la longueur de la paroi interne de la bague d'étalonnage, lesquelles cannelures s'étendent longitudinalement par rapport à ces deux pièces et se succèdent circonférentiellement avec un profil en dent de scie ; les deux pièces 6, 1 sont liées en translation par clipsage d'ergots 62 portés par la paroi interne de la bague d'étalonnage, dans une gorge périphérique creusée dans le pourtour de la douille entre les régions cannelées et la zone de la douille portant l'écrou 2 de liaison. L'étalonnage et la limitation par construction de la gamme de réglage sont réalisés en faisant coopérer des moyens prévus sur le bouton de manoeuvre 3 et la bague d'étalonnage 6 ; plus précisément, le bouton de manoeuvre 3 présente intérieurement, à sa partie en regard de la douille 1 à distance de celle-ci, deux butées 31 destinées à limiter son mouvement de vissage ou de dévissage autour de la douille, sous la forme de moulures protubérantes par rapport à sa paroi interne, s'étendant longitudinalement, tandis que la partie de la bague d'étalonnage 6 insérée entre la douille et le bouton, dont le rayon extérieur général est légèrement inférieur à la distance des moulures du bouton à l'axe central, présente également une moulure protubérante longitudinale formant butée d'arrêt 63 et s'étendant jusqu'à proximité de la paroi interne du bouton ; le positionnement angulaire initial de la bague d'étalonnage 6 autour de la douille 1, par rapport au bouton de manoeuvre 3, détermine donc les angles maximum de rotation du bouton dans un sens ou dans l'autre par rapport à la bague d'étalonnage et à la douille ; l'angle total maximal de rotation déterminé par ces butées 31, 63 est prévu pour être de l'ordre de 285 degrés ; le positionnement relatif des pièces est facilité par la présence d'une échelle graduée autour du bouton 3 et d'un repère à l'extérieur de la bague d'étalonnage 6.

Le dispositif comprend également une bague de limitation 7 de la gamme de réglage permettant une limitation supplémentaire et disposée autour du bouton de manoeuvre 3 dans une région de celui-ci plus proche de l'élément thermostatique 4 que la bague d'étalonnage 6 ; cette bague 7 montée coulissante autour du bouton de manoeuvre 3 en étant normalement liée en rotation à celui-ci mais mobile en translation longitudinale, comporte à cet effet, deux doigts de butée 71 s'étendant en proéminence longitudinalement à partir d'une couronne interne de butée 72, en direction de l'écrou de liaison 2, et dont les directions radiales respectives sont écartées angulairement de 15 degrés ; ces doigts 71 sont adaptés à pénétrer dans des alvéoles 32 creusées longitudinalement dans la face interne de la paroi latérale du bouton de manoeuvre 3 et s'y succédant circonférentiellement tous les 15 degrés ; le guidage de la bague de limitation 7 autour du bouton de manoeuvre est assuré au niveau de la couronne interne 72, tandis que la paroi latérale de cette bague, à l'opposé de la bague d'étalonnage 6, présente un diamètre suffisamment grand pour permettre l'interposition d'un fourreau entre la bague de limitation et le bouton de manoeuvre 3 et un coulissement (limité comme on le verra dans la suite) de la bague 7 autour du bouton. Lorsque la bague de limitation 7 est contre la partie du bouton de manoeuvre 3 qui entoure la douille 1 à distance de celle-ci, avec ses doigts de butée 71 logés dans deux alvéoles 32 voisines, du bouton de manoeuvre, ces doigts de butée interviennent avant et ainsi en quelque sorte se substituent en tant que butée à l'une des butées 31 de ce bouton et limitent sa course en rotation en direction de la butée 63 de la bague d'étalonnage 6 ; si les deux doigts de butée 71, dont l'emplacement est repéré à l'extérieur de la bague de limitation 7, sont insérés dans les deux alvéoles du bouton 3 disposées de part et d'autre de la butée 63 de la bague d'étalonnage 6 dont l'emplacement est également repéré à l'extérieur de celle-ci, toute rotation du bouton est rendue impossible et ainsi le réglage imposé par celui-ci n'est pas modifiable sauf en rétractant la bague de limitation, laquelle peut être disposée de telle sorte que les doigts soient en un emplacement d'attente 33 prévu dans le bouton dans une zone d'une cinquantaine de degrés s'étendant entre les butées 31. Extérieurement, la bague de limitation 7 comporte, à proximité de la bague d'étalonnage 6, une collerette de butée 73 dont le rôle sera mentionné plus loin.

Le cache-bouton 8, sous la forme d'un fourreau ajouré, est fixé par clipsage autour du bouton de manoeuvre 3 du côté opposé à la bague d'étalonnage 6 ; afin de constituer un organe de butée limitant les possibilités de coulissement de la bague de limitation 7 en direction opposée à la bague d'étalonnage 6, et empêchant le retrait de cette bague de limitation, ce cache-bouton 8 a un diamètre extérieur supérieur au diamètre intérieur de la couronne de butée 72 de la bague 7.

Cette structure est bien adaptée à la réception d'un dispositif d'inviolabilité 9 comportant une bague 91, constituée par une jupe pouvant être enfilée autour de la tête par la face avant de celle-ci et immobilisée en position, présentant une lumière 911 laissant apparaître les graduations du bouton de manoeuvre 3 qui sont à proximité du repère de réglage porté par la bague d'étalonnage 6. La bague d'inviolabilité 91, en position (figure 3), recouvre la partie de la tête s'étendant depuis la bague de limitation 7 jusqu'à l'écrou 2 de liaison au corps, en incluant à peu près la moitié de la hauteur de ces deux pièces ; son diamètre intérieur dans ses régions disposées sans intermédiaire vis-à-vis de la bague de limitation et de la bague d'étalonnage 6, s'ajuste autour de la bague d'étalonnage, qui présente le plus grand diamètre extérieur, sauf à son extrémité opposée à cette bague, où elle présente un rétrécissement 912 de diamètre inférieur à celui de la collerette de la butée 73 de la bague de limitation 7 qu'elle renferme, pour interdire le dégagement des doigts 71 de celle-ci ; à sa partie inférieure, deux régions diamétralement opposées disposées vis-à-vis de l'intervalle entre la bague d'étalonnage 6 et l'écrou de liaison 2 comportent deux logements 913 parallèles s'étendant en direction transversale par rapport à la tête de part et d'autre de l'axe longitudinal de celle-ci, dans lesquels sont logées deux goupilles 92 respectives maintenues dans leurs régions d'extrémité par la paroi de la bague d'inviolabilité 91 et dont la partie centrale vient s'insérer dans l'intervalle entre la bague d'étalonnage et l'écrou de liaison, de telle sorte que les axes longitudinaux parallèles des goupilles soient sécants aux projections du contour de la bague d'étalonnage et de l'écrou sur le plan qu'ils définissent. Les goupilles 92 comportent un corps 921 et une tête 922 de plus petit diamètre que le corps, reliés par une gorge 923 d'encliquetage destinée à coopérer avec un rétrécissement 914 prévu dans le logement 913 correspondant de la bague d'inviolabilité 91.

De la sorte, lorsqu'une gamme de réglage ou un réglage particulier de la tête a été défini au moyen des doigts de butées 71, il suffit d'enfiler la bague d'invioliabilté 91 et de la positionner autour de la tête à l'emplacement prévu, puis de l'immobiliser en plaçant les goupilles 92 dans leur logement 913 et en les y encliquetant, pour interdire la modification de la gamme de réglage ou du réglage, sauf en chassant volontairement les goupilles, ce qui ne peut se produire ni spontanément ni même avec des outils de fortune.

L'assemblage de cette tête s'effectue de la manière suivante :
- on introduit l'insert 53 dans le poussoir 52 et on y positionne le ressort de surcourse 55;
- on introduit le ressort de rappel 54 dans la douille 1 et on le positionne autour du puits de guidage 12 de celle-ci, on clipse le poussoir 52 et le pivot 51, emprisonnant ainsi le ressort de surcourse 55 légèrement comprimé, et on introduit le poussoir dans le puits de guidage entouré du ressort de rappel ;
- on enfile la bague de limitation 7 autour du bouton de manoeuvre 3, puis le cache-bouton 8 également autour du bouton, mais à l'intérieur de la bague de limitation 7, on clipse le cache-bouton autour du bouton et on dispose la bague de limitation en position d'attente sur le bouton de manoeuvre (la bague de limitation ne peut plus alors être enlevée par suite de la présence du cache-bouton) ;
- on introduit l'élément thermostatique 4 dans le bouton de manoeuvre 3 et on introduit la tige 511 du pivot 51 dans l'élément thermostatique en vissant la douille 1 dans le bouton de manoeuvre ;
- on dispose l'ensemble obtenu dans un bain ou une enceinte climatisée régulée à une température d'étalonnage choisie, par exemple 21°C ; après stabilisation de la température de l'ensemble à la température d'étalonnage, on étalonne la tête en vissant la douille 1 dans le bouton de manoeuvre 3 de telle sorte que la distance entre la face de l'insert 53 opposée à l'élément thermostatique 4 soit à une distance d de l'extrémité libre de la douille, ici égale à 8,6 mm ± 0,05 mm ; lorsque l'on a ajusté cette distance à cette valeur et après contrôle de la cote, la calibration étant réalisée, on introduit la bague d'étalonnage 6 dans le bouton de manoeuvre 3 autour de la douille 1 en faisant coopérer leurs cannelures 61, 13 respectives en alignant son repère en face de la graduation "3" du bouton de manoeuvre ; dans ces conditions, la graduation "3" correspond à une température de 21°C, et il est aisé, par extrapolations, de connaître les températures correspondant à chacune des autres graduations ; la rotation du bouton de manoeuvre 3 est limitée par la coopération des butées 62, 31 de la bague d'étalonnage 6 et du bouton de manoeuvre déterminant d'un côté une position de chauffage minimal antigel et de l'autre une position de chauffage maximal avec une course totale de 285 degrés ;
- on enfile l'écrou de liaison 2, et on le clipse autour de la douille 1 ; ainsi, la bague d'étalonnage 6 ne peut plus être retirée ni sa position modifiée ;
- on clipse le cache de finition 10 sur le bouton de manoeuvre 3.

Après quoi, il est possible de procéder à la limitation de la gamme de règlage de la tête, avant ou après son montage sur un corps de robinet lui-même monté ou non. La limitation haute par l'utilisateur, des points de consigne, est réalisée par une limitation supplémentaire de la rotation angulaire du bouton de manoeuvre 3, au moyen de la bague de limitation 7. A cette fin, on rétracte la bague de limitation 7 en direction de l'extrémité libre du cache-bouton 8, et après rotation appropriée, on la repousse et on introduit ses doigts de butée 71 dans les alvéoles 32 souhaitées, comme déjà mentionné ; comme ces alvéoles sont réparties tous les 15 degrés, la précision du réglage est d'environ 1,2°C. On peut également laisser la bague de limitation en position d'attente.

Après quoi, il est possible de rendre inviolable la nouvelle limitation (ou l'absence de limitation), en enfilant la bague d'inviolabilité 91 autour de la tête comme déjà mentionné et en clipsant les goupilles 92 dans leur logement 913.

Lorsque le robinet est en place par exemple sur un radiateur de chauffage central, si la température est plus faible que la température réglée, l'élément thermostatique est rétracté, il en est de même du pivot 51 et du poussoir 52, ainsi que du clapet, et le robinet est ouvert ; au fur et à mesure que la température augmente, l'équipage mobile est translaté par l'élément thermostatique 4, et le pivot 51 repousse le clapet vers le siège ; si la température continue d'augmenter alors que le clapet est contre le siège, le ressort de surcourse 55 absorbe le surcroît d'extension du pivot 51. Si la température diminue, le clapet ne quitte pas le siège tant que la distance entre le poussoir 52 et le pivot 51 n'a pas augmenté jusqu'à sa valeur maximale autorisée.

En l'absence de bague d'inviolabilité 91, la gamme de réglage peut être modifiée simplement en tirant la bague de limitation 7 en direction de la face avant de la tête, en modifiant son orientation en rotation, et en la repoussant en direction du corps de robinet.

Bien entendu, l'invention n'est pas limitée à la forme de réalisation ci-dessus décrite et représentée, et on pourra en prévoir d'autres formes, sans sortir de son cadre. On pourra par exemple créer des variantes de réalisation dans lesquelles le bouton de manoeuvre 3 présente des formes extérieures permettant la suppression du cache-bouton 8 ; dans ce cas, la paroi latérale du bouton de manoeuvre 3 comporte une disposition alternée de lumières et de parties pleines permettant une bonne "ventilation" de l'élément thermostatique ; afin de limiter les possibilités de coulissement de la bague de limitation 7 en direction opposée à la bague d'étalonnage 6, la paroi latérale du bouton de manoeuvre 3 présente extérieurement deux zones de forme générale cylindrique se succédant le long de l'axe central du bouton, celle de plus grand diamètre étant celle qui s'étend du côté de l'élément thermostatique, séparées par un épaulement formant butée pour la couronne interne 72 de la bague de limitation 7 ; afin que cette bague 7 puisse être aisément enfilée autour du bouton 3 après le montage de celui-ci, dans cette forme de réalisation, la couronne interne 72 est réalisée avec un diamètre intérieur à peine inférieur au plus grand diamètre du bouton de manoeuvre 3 et sous forme légèrement déformable élastiquement grâce à l'action conjuguée de la nature du matériau qui constitue la bague, et des dimensions et de la forme de cette couronne, laquelle comporte des échancrures interrompant sa continuité ; de la sorte, pour sa mise en place, la bague de limitation 7 peut être passée à force autour du bouton de manoeuvre 3, et, une fois mise en place, ses possibilités de coulissement en direction opposée à la bague d'étalonnage sont limitées par le moyen de butée constitué par l'épaulement du bouton de manoeuvre présentant un diamètre extérieur supérieur au diamètre intérieur de la couronne.

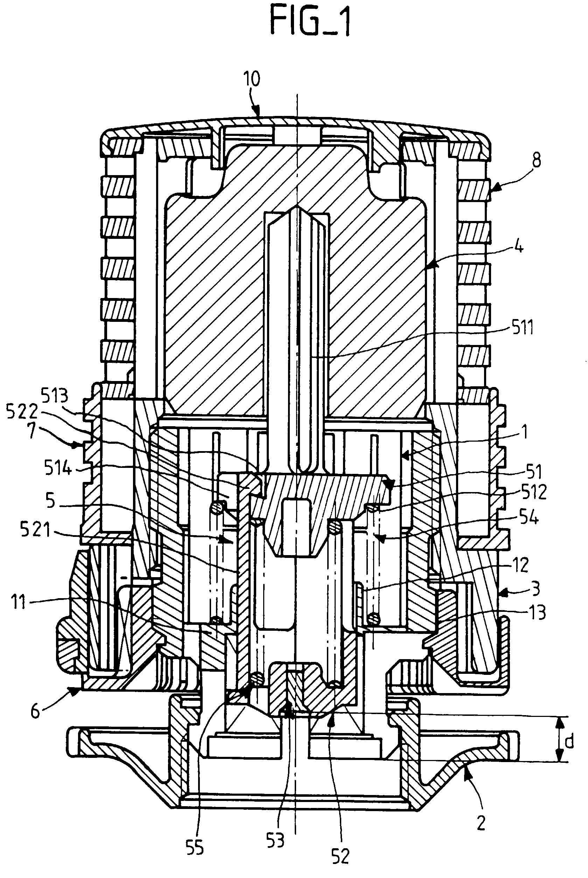

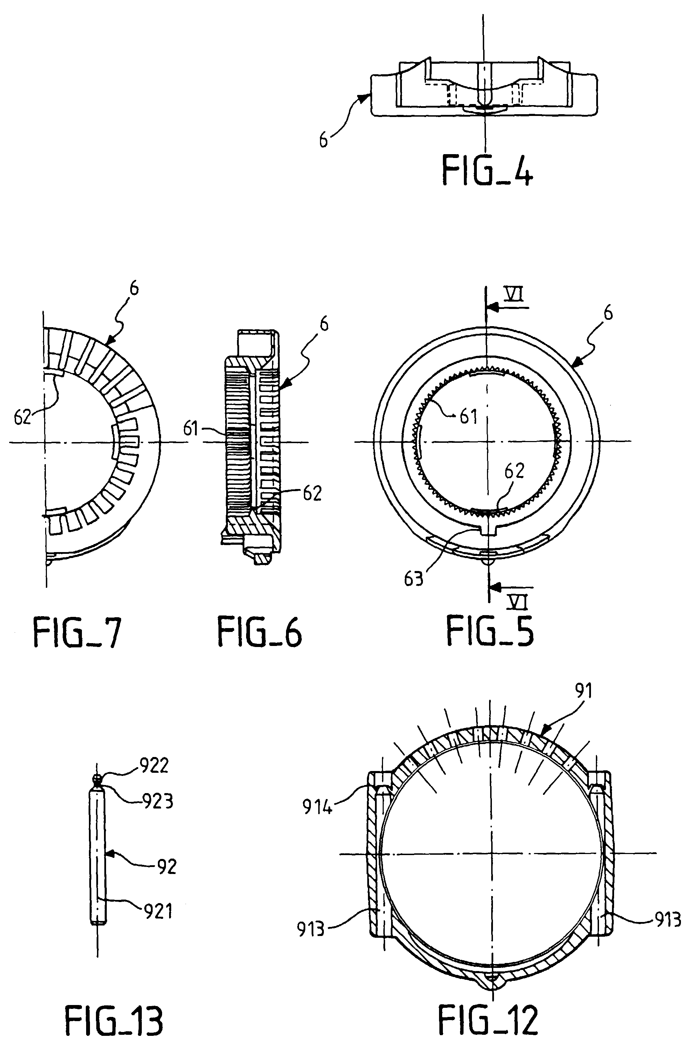

Par ailleurs, la bague d'étalonnage 6 peut présenter une forme enveloppante sur tout son pourtour comme cela est représenté sur les dessins (figures 1, et 4 à 7), avec une lucarne en matériau transparent pour permettre la vision des graduations du bouton de manoeuvre 3, ou encore une simple échancrure pour permettre cette vision.

Egalement, l'écrou de liaison 2 peut prendre des formes très variées, mais il faut noter que certaines formes de cet écrou ne permettent pas l'adaptation du dispositif d'inviolabilité qui a été décrit plus haut, et dans ce cas il est nécessaire d'adapter un dispositif d'inviolabilité constitué de deux demi-bagues assemblées par vis.

## Revendications

1. Tête de robinet thermostatique à structure coaxiale, destinée à être fixée à un corps de robinet, du type comportant une douille principale (1) dont une première région d'extrémité est adaptée à être fixée audit corps par au moins un organe de fixation (2), un bouton de manoeuvre (3) creux vissé à la douille autour d'une deuxième région d'extrémité de celle-ci opposée à la première, un élément thermostatique (4) logé dans le bouton de manoeuvre au-delà de la deuxième région d'extrémité de la douille, un équipage mobile (5) logé au moins partiellement dans la douille et comprenant du côté de la première région d'extrémité de celle-ci un poussoir (52) de clapet de soupape, cet équipage mobile étant en contact avec l'élément thermostatique et actionnable par celui-ci en translation entre deux emplacements où le poussoir est à des distances différentes de la première région d'extrémité de la douille, caractérisée en ce qu'elle comporte une bague d'étalonnage (6) partiellement insérée entre la douille et le bouton de manoeuvre à l'opposé de l'élément thermostatique et liée en rotation à la douille, cette bague comportant au moins une butée d'arrêt (63) adaptée à coopérer avec au moins une butée (31) portée intérieurement par le bouton de manoeuvre, une bague de limitation (7) montée coulissante autour du bouton de manoeuvre dans une région de celui-ci plus proche de l'élément thermostatique que la bague d'étalonnage et comportant une couronne interne de butée (72) à partir de laquelle s'étend longitudinalement et en direction de l'organe de liaison (2), au moins un organe de butée (71) de limitation de course en rotation, destiné à être inséré dans une alvéole longitudinale (32) ménagée dans la face interne du bouton de manoeuvre pour coopérer sélectivement avec la butée d'arrêt de la bague d'étalonnage pour limiter sélectivement la possibilité de rotation du bouton de manoeuvre, et un moyen de butée (8) porté par le pourtour du bouton de manoeuvre du côté opposé à la bague d'étalonnage, présentant un diamètre extérieur supérieur au diamètre intérieur de la couronne de la bague de limitation afin de limiter les possibilités de coulissement de la bague de limitation en direction opposée à la bague d'étalonnage.

2. Tête de robinet selon la revendication 1, caractérisée en ce qu'elle comporte une bague d'inviolabilité (91) fixée autour d'au moins une partie du bouton de manoeuvre (3) de la bague d'étalonnage (6) et de la bague de limitation (7), par au moins un moyen de fixation (92) logé partiellement dans une chambre (913) de la paroi de la bague d'inviolabilité et partiellement dans un espace d'immobilisation de la tête de robinet.

3. Tête de robinet selon la revendication 2 caractérisée en ce que l'espace d'immobilisation est un intervalle s'étendant entre l'organe de fixation (2) et la bague d'étalonnage (6).

4. Tête de robinet selon la revendication 1, caractérisée en ce que la douille (1) et la bague d'étalonnage (6) comportent des cannelures longitudinales (13, 61) mutuellement engrenées pour lier la bague d'étalonnage à la douille.

5. Tête de robinet selon la revendication 1, caractérisée en ce que la butée (63) de la bague d'étalonnage (6) est une protubérance vers l'extérieur, de la face externe d'une paroi interne de la bague d'étalonnage, s'étendant longitudinalement sur cette face externe.

6. Tête de robinet selon la revendication 1, caractérisée en ce que les butées (31) du bouton de manoeuvre (3) sont des moulures protubérantes par rapport à la face interne de son pourtour, s'étendant longitudinalement.

7. Tête de robinet selon la revendication 1, caractérisée en ce que le bouton de manoeuvre (3) comporte, dans la face interne de sa paroi latérale, des alvéoles (32) creusées longitudinalement et s'y succédant circonférentiellement.

8. Tête de robinet selon la revendication 1, caractérisée en ce que la bague de limitation (7) comporte deux doigts de butée (71) s'étendant en proéminence longitudinalement à partir de sa couronne interne de butée (72).

9. Tête de robinet selon la revendication 2, caractérisée en ce que la bague de limitation (7) comporte une collerette extérieure de butée (73), et la bague d'inviolabilité (91) comporte un rétrécissement interne (912) de diamètre inférieur à celui de cette collerette.

10. Tête de robinet selon la revendication 1, caractérisée en ce que le moyen de butée est un cache-bouton (8) fixé autour d'une partie du bouton de manoeuvre.

11. Tête de robinet selon la revendication 1, caractérisée en ce que le moyen de butée est un épaulement séparant deux zones de forme générale cylindrique et de diamètres différents, de la paroi latérale du bouton de manoeuvre (3).

## Patentansprüche

1. Thermostatventilkopf mit koaxialem Aufbau, der dazu ausgelegt ist, auf einem Ventilgehäuse befestigt zu sein, vom Typ umfassend eine Haupthülse (1), bei der ein erster Endbereich zur Befestigung am Gehäuse mittels wenigstens eines Befestigungselements (2) ausgelegt ist, einen auf die Hülse um einen dem ersten entgegengesetzten zweiten Endbereich derselben herum geschraubten hohlen Betätigungsknopf (3), ein im Betätigungsknopf jenseits des zweiten Endbereichs der Hülse aufgenommenes Thermostatelement (4), und ein wenigstens teilweise in der Hülse aufgenommenes und an der Seite des ersten Endbereichs derselben einen Ventilklappendrücker (52) umfassendes bewegliches Teil (5), wobei dieses bewegliche Teil in Kontakt mit dem Thermostatelement ist und von diesem zur Verschiebung zwischen zwei Stellungen betätigbar ist, in denen der Drücker sich in unterschiedlichen Abständen vom ersten Endbereich der Hülse befindet, dadurch gekennzeichnet, daß er einen Eichring (6) umfaßt, der teilweise zwischen der Hülse und dem Betätigungsknopf gegenüber dem Thermostatelement eingesetzt und mit der Hülse drehfest verbunden ist, wobei dieser Ring wenigstens einen Halteanschlag (63) umfaßt, der zur Zusammenwirkung mit wenigstens einem vom Betätigungsknopf innen getragenen Anschlag (31) ausgelegt ist, ferner einen Begrenzungsring (7) umfaßt, der um den Betätigungsknopf herum verschiebbar in einem Bereich desselben angeordnet ist, der näher am Thermostatelement liegt als der Eichring, und der einen inneren Anschlagkranz (72) umfaßt, von dem ausgehend sich in Längsrichtung und in Richtung des Verbindungselements (2) wenigstens ein Anschlagelement (71) zur Begrenzung des Drehwegs erstreckt, welches dazu ausgelegt ist, in einer in der Innenfläche des Betätigungsknopfs vorgesehenen Längszelle (32) eingesetzt zu sein, um wahlweise mit dem Halteanschlag des Eichrings zur wahlweisen Begrenzung der Drehmöglichkeit des Betätigungsknopfs zusammenzuwirken, und ferner ein Anschlagmittel (8) umfaßt, das am Umfang des Betätigungsknopfs an der dem Eichring entgegengesetzten Seite getragen ist und einen Außendurchmesser aufweist, der größer ist als der Innendurchmesser des Kranzes des Begrenzungsrings, um die Verschiebemöglichkeiten des Begrenzungsrings in der zum Eichring entgegengesetzten Richtung zu begrenzen.

2. Ventilkopf nach Anspruch 1, dadurch gekennzeichnet, daß er einen Unantastbarkeitsring (91) umfaßt, der um wenigstens einen Teil des Betätigungsknopfs (3), des Eichrings (6) und des Begrenzungsrings (7) herum mittels wenigstens eines Befestigungsmittels (92) befestigt ist, welches teilweise in einer Kammer (913) der Wand des Unantastbarkeitsrings und teilweise in einem Halteraum des Ventilkopfs aufgenommen ist.

3. Ventilkopf nach Anspruch 2, dadurch gekennzeichnet, daß der Halteraum ein Zwischenraum ist, der sich zwischen dem Befestigungselement und dem Eichring (6) erstreckt.

4. Ventilkopf nach Anspruch 1, dadurch gekennzeichnet, daß die Hülse (1) und der Eichring (6) Längsrillen (13, 61) umfassen, die zur Verbindung des Eichrings mit der Hülse gegenseitig im Eingriff sind.

5. Ventilkopf nach Anspruch 1, dadurch gekennzeichnet, daß der Anschlag (63) des Eichrings (6) ein nach außen gerichteter Vorsprung der Außenfläche einer Innenwand des Eichrings ist, der sich auf dieser Außenfläche in Längsrichtung erstreckt.

6. Ventilkopf nach Anspruch 1, dadurch gekennzeichnet, daß die Anschläge (31) des Betätigungsknopfs (3) Stege sind, die bezüglich der Innenfläche seines Umfangs vorstehen und sich in Längsrichtung erstrecken.

7. Ventilkopf nach Anspruch 1, dadurch gekennzeichnet, daß der Betätigungsknopf (3) an der Innenfläche seiner Seitenwand Zellen (32) umfaßt, die in Längsrichtung vorgesehen sind und in Umfangsrichtung aufeinanderfolgen.

8. Ventilkopf nach Anspruch 1, dadurch gekennzeichnet, daß der Begrenzungsring (7) zwei Anschlagfinger (71) umfaßt, die sich ausgehend von seinem inneren Anschlagkranz (72) in Längsrichtung vorstehend erstrecken.

9. Ventilkopf nach Anspruch 2, dadurch gekennzeichnet, daß der Begrenzungsring (7) einen äußeren Anschlagkragen (73) umfaßt und daß der Unantastbarkeitsring (91) eine innere Verengung (912) mit einem Durchmesser umfaßt, der kleiner als jener dieses Kragens ist.

10. Ventilkopf nach Anspruch 1, dadurch gekennzeichnet, daß das Anschlagmittel eine Knopfabdeckung (8) ist, die um einen Teil des Betätigungsknopfs herum befestigt ist.

11. Ventilkopf nach Anspruch 1, dadurch gekennzeichnet, daß das Anschlagmittel eine Schulter ist, die zwei Bereiche der Seitenwand des Betätigungsknopfs (3) mit allgemein zylindrischer Gestalt und unterschiedlichen Durchmessern trennt.

## Claims

1. Thermostatic valve head with a coaxial structure, designed to be fixed to a valve body, of the type comprising a main sleeve (1) of which a first end region is adapted to be fixed to the said body by at least one fixing device (2), a hollow manipulating knob (3) screwed to the sleeve about a second end region thereof opposite the first, a thermostatic element (4) housed in the manipulating knob beyond the second end region of the sleeve, a movable assembly (5) housed at least partially in the sleeve and including a valve lifter (52) on the side of the first end region thereof, this movable assembly being in contact with the thermostatic element and being capable of being actuated thereby in translation between two locations where the lifter is at two different distances from the first end region of the sleeve, characterized in that it includes a calibrating ring (6) partially inserted between the sleeve and the manipulating knob opposite the thermostatic element and linked in rotation to the sleeve, this ring carrying at least one check stop (63) adapted to cooperate with at least one stop (31) carried internally by the manipulating knob, a limiting ring (7) mounted slidingly around the manipulating knob in a region thereof closer to the thermostatic element than the calibrating ring and carrying an internal stop crown (72) starting from which there extends longitudinally and in the direction of the connecting device (2), at least one stop device (71) for limiting the traverse in rotation, designed to be inserted in a longitudinal cell (32) provided in the inner face of the manipulating knob to cooperate selectively with the check stop of the calibrating ring so as to limit selectively the possibility of rotating the manipulating knob, and a stop device (8) carried by the periphery of the manipulating knob on the side opposite the calibrating ring, having an external diameter greater than the internal diameter of the crown of the limiting ring so as to limit the possibilities of the limiting ring sliding in the direction opposite to the calibrating ring.

2. Valve head according to claim 1, characterized in that it includes a tamper-proof ring (91) fixed around at least one part of the manipulating knob (3) of the calibrating ring (6) and of the limiting ring (7), by at least one means of attachment (92) partially housed in a chamber (913) of the wall of the tamper-proof ring and partially in an immobilization space of the valve head.

3. Valve head according to claim 2, characterized in that the immobilization space is an interval extending between the attachment device (2) and the calibrating ring (6).

4. Valve head according to claim 1, characterized in that the sleeve (1) and the calibrating ring (6) include longitudinal splines (13, 61), mutually engaged so as to link the calibrating ring to the sleeve.

5. Valve head according to claim 1, characterized in that the stop (63) of the calibrating ring (6) is an outward-facing projection from the outer face of an inner wall of the calibrating ring, extending longitudinally over this outer face.

6. Valve head according to claim 1, characterized in that the stops (31) of the manipulating knob (3) are mouldings projecting with respect to the inner face of this knob's periphery, extending longitudinally.

7. Valve head according to claim 1, characterized in that the manipulating knob (3) includes, in the inner face of its side wall, cells (32) hollowed longitudinally and following each other there circumferentially.

8. Valve head according to claim 1, characterized in that the limiting ring (7) includes two stop fingers (71) extending in projection longitudinally from its inner stop crown (72).

9. Valve head according to claim 2, characterized in that the limiting ring (7) includes an outer stop collar (73), and the tamper-proof ring (91) includes an internal narrowing (912) with a diameter less than that of this collar.

10. Valve head according to claim 1, characterized in that the stop device is a knob cover (8) fixed around part of the manipulating knob.

11. Valve head according to claim 1, characterized in that the stop device is a shoulder separating two zones with a generally cylindrical form and of different diameters, of the side wall of the manipulating knob (3).
